# EUROPEAN PATENT APPLICATION

(11) **EP 3 045 044 A1**
(43) Date of publication of application: **20.07.2016**
(21) Application number: 16150785.0
(22) Date of filing: 11.01.2016
(51) Int. Cl.: A21D 2/18, A21D 10/00, A21D 13/06

(54) **BETA-GLUCAN CONTAINING PREGELATINIZED AND GROUND FLOUR AS A NATURAL ENHANCER OF A FOOD PRODUCT**

(30) Priority: 09.01.2015 FI 20155013
(71) Applicant: Polar Glucan Oy, 00990 Helsinki (FI); OAT Services Ltd, Southampton SO16 7FU (GB)
(72) Inventor: LEHTOMÄKI, Ilkka, 00990 Helsinki (FI); MAUNSELL, Cark, Southampton, Hampshire SO16 7FU (GB); HOKKANEN, Sanna, 00990 Helsinki (FI); AWADH, Jamila, 00990 Helsinki (FI); MYLLYMÄKI, Olavi, 00990 Helsinki (FI)
(74) Representative: Seppo Laine Oy

(57) **Abstract**

The present invention relates to processed flour containing beta glucan as a natural improver of a food product. The objective of the invention is a method for the preparation of a food product by utilizing the improver flour of the invention, a dough obtainable by the method and a baked product produced therefrom as well as the use of the method to obtain a natural bread improver and for producing a baked product having an improved volume, structure and keeping quality.

## Description

### Field of the invention

The present invention relates to a novel type of natural flour, being used e.g. to improve baking. The flour according to the invention is used for improving the taste, increasing the volume, improving the structure, extending the keeping quality of a food product (such as bread), as well as enabling easy addition of oil and reduction of additives. The invention is in particular related to beta-glucan -containing prepasted and ground flour, an embodiment of which being an extruded colloidal meal, and to its use in a dough or mass used in the production of a food product.

### Background

Dough can be described as a foam structure of a dough material and air bubbles. The bubble seeds are generated during kneading. During fermentation of sugar by the yeast carbon dioxide is generated, which makes the bubbles grow during leavening and oven spring. Bubbles can also be grown by using baking powder, which releases carbon dioxide under proper conditions. The function of the dough material generated from the flour and remaining between the bubbles is to retain the bubbles and to keep them in a suitable size and shape. The interface between the bubbles and the dough material is also a significant factor in the behavior of the bubbles. The behavior of the interface is influenced by dough material substances such as fat, proteins and emulsifiers, for example. Bubble formation in the dough material may also be influenced by physical factors such as solid or large particles that reduce the gas retaining capacity of the bubble. If the dough material is not able to retain the bubbles or the interface of the bubbles is weak, the bread will not rise or it will have a poor structure.

Elasticity, i.e. toughness and correct viscosity as well as proper raw materials are required for dough material. Wheat gluten is the most common viscosity-increasing agent. Viscosity of dough material is measured with a farinograph. Loose dough, i.e. dough having too low viscosity, rises poorly due to the fact that the carbon dioxide is leaking out. Hard dough, having too high viscosity, prevents the bubbles from expanding and results in small and hard bread. Viscosity can be adjusted for example by the amount of water. It is known that e.g. wheat bran weakens bread structure. It has been observed that finely ground wheat bran may weaken the structure to a larger extent than less ground wheat bran.

Aids/additives used in baking include for example gluten, enzymes, emulsifiers, proteins, prepasted starches and flours as well as malt products and vegetable gums such as psyllium, guar gum and xanthan. In addition, starters, i.e. mother doughs have been used. Some baking aids have an effect on the dough material only, some also on the bubble interface. Baking aids frequently carry E-codes or are otherwise artificially produced, such as many enzymes.

EU has granted the right to use health claims in foodstuffs provided that the amount of beta glucans is high enough. As a result, beta glucan -containing breads have begun to appear on the market. Supplementing bread with oats or barley, which contain beta glucan but not gluten, has resulted in impaired bread structure. A general statement has been that a fiber, such as beta glucan, impairs the bread structure.

Bread must have a good taste, be soft and also possess an acceptable structure. It must have a long shelf life. It is preferable for a bread to have few E-codes. Furthermore, it is often advantageous that it contains healthy components such as dietary fiber, omega-3-fatty acids or beta glucan. Currently it is common to attempt to lower the amount of digestible carbohydrate by adding other components such as seeds, protein, dietary fiber and fat, whereby the bread's taste and structure are impaired.

Hydrocolloids have been utilized to improve bread structure. They have for example been used in attempts to mimic gluten in breads that are gluten-free. As hydrocolloid, for example hydroxypropyl methyl cellulose, carboxymethyl cellulose, psyllium, carob flour, guar gum, agarose, xanthan and beta glucan have been tested (Huttner and Arendt 2010).

Varying baking results have been achieved with beta glucan, depending on the beta glucan product used, molecular weight of beta glucan, quality of wheat flour and the manner of addition of the beta glucan product. Skendi *et al.* (2008) observed that a high molecular weight beta glucan concentrate increased bread volume and softness. Addition of oatmeal or barley flour resulted in lower bread quality. In the study of Moriartey (2009) the stability of the dough improved when measured with a farinograph, but the volume of the bread decreased. The conclusion was that beta glucan interfered with the gluten network of the dough material. Bread volume decreased also in the experiments of Hager (2009) upon adding to the dough beta glucan extracted from oats.

The significance of parbaking has increased strongly. Owing to parbaking, the shops are able to offer the customers fresh bread regardless of the time of the day. Furthermore, parbaking makes it possible for the bakery to even out its workload and decrease night work by preparing the doughs in advance. The quality of parbaked products does, however, not meet the quality of normal baking. Barcenas *et al.* (2004) proposed that hydrocolloids improve parbaking. They did not test beta glucan of oats or barley. Neither did they test oil emulsions.

Finnish patent FI 124441 relates to a method for modifying flour in a natural manner to achieve controlled levels of gelatinization, and to new cereal products having enhanced colloidal properties. More particularly, described in the patent is an extrusion method with adjustments and operational parameters that in combination with the correct specification of the properties of the raw material flour are suitable for the production of colloidal oatmeal, especially oatmeal suitable for use in cosmetics.

In light of the prior art there is a need for a solution providing a natural means to both improve the volume, structure and keeping quality of the food product being prepared and enable easy addition of oil as well as reduction of the amount of fat and E-numbers.

### Brief description of the invention

The present invention describes a method for producing an improved food product.

In particular, the invention relates to the use of beta glucan -containing prepasted and ground flour, such as e.g. a colloidal meal, as a natural improver as part of the dough or mass, from which a food product, such as a baked product, is produced.

More specifically the present invention is characterized by what is presented in the characterizing part of claim 1. Characteristics of the use according to the invention are in turn presented in claim 16.

Significant advantages are obtained with the invention. It has surprisingly been found that beta glucan in soluble form contributes to e.g. baking by yielding a final product having a higher moisture content and both an improved structure and volume. Beta glucan - containing prepasted and ground flour, e.g. colloidal meal, has in turn been found to contribute to the action of beta glucan. Accordingly, the present solution provides a method which makes it possible to naturally improve the taste, volume, structure and keeping quality of bread, for example.

In the following, preferred embodiments will be described in more detail e.g. by means of figures.

### Brief description of the figures

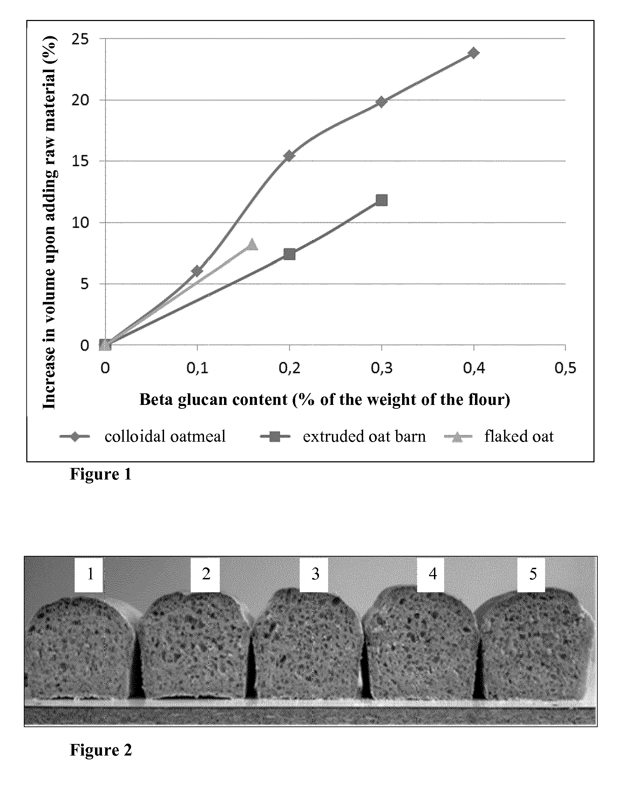

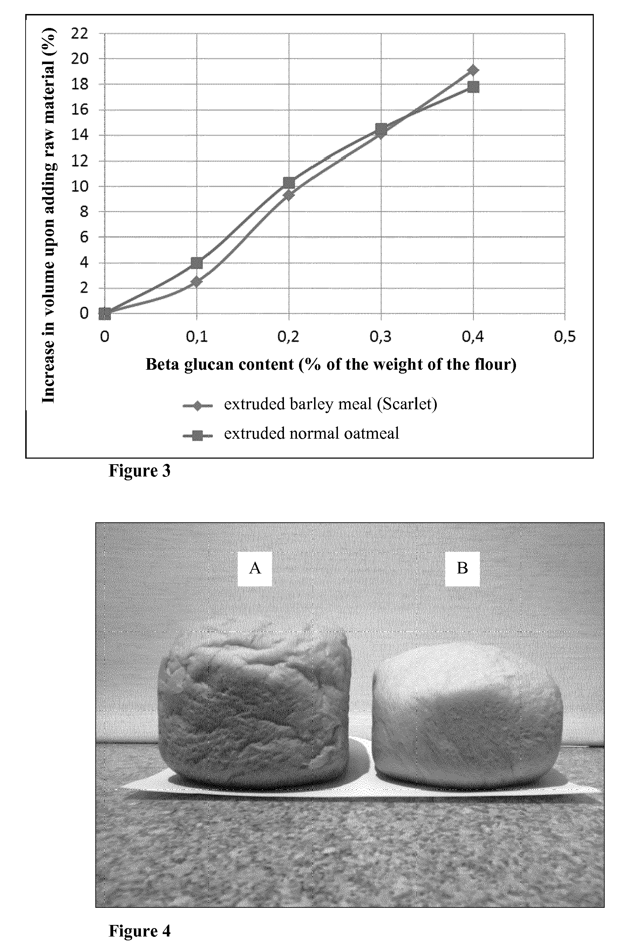

Shown in Figure 1 is the volume increase of breads produced by the method according to the invention compared with the control bread, as a function of beta glucan content and using different oatmeals.
Figure 2 shows the porous structure of breads comprising colloidal oatmeal. 1. control bread, 2. colloidal oatmeal 2%, 3. colloidal oatmeal 4%, 4. colloidal oatmeal 6%, 5. colloidal oatmeal 8%.
Shown in Figure 3 is the volume increase of breads produced by the method according to the invention compared with the control bread, as a function of beta glucan content and using beta glucan -containing ground barley meal prepasted by extrusion and beta glucan - containing barley meal ground in the normal manner and prepasted by extrusion.
Figure 4 depicts a bread comprising colloidal oatmeal (A) and a control bread (B) made by using an automatic bread maker.
Shown in Figure 5 is a process associated with parbaking of bread rolls.
Figure 6 depicts a control bread roll produced by parbaking, a first test bread roll, to which colloidal oatmeal has been added 6% as a colloid blend and 1.5% in dry form, and a second test bread roll, to which colloidal oatmeal has been added 6% as a colloid blend and 2.5% in dry form.
Shown in Figure 7 is a process associated with parbaking of buns.
Figure 8 depicts a control bun made by using margarine, a first test bun, to which emulsion (colloidal meal 22.9%, oil 40.7% and water 36.4%) and colloidal meal in dry form 1.5% have been added, and a second test bun, to which has been added emulsion only (colloidal meal 22.9%, oil 45.7% and water 31.4%).
Shown in Figure 9 is the effect of colloidal meal used as improver in home parbaking, wherein bread A is the control and bread B comprises oatmeal.
Figure 10 depicts the structure of colloidal oatmeal, rapeseed oil and water.

### Preferred embodiments of the invention

When a beta glucan -containing dehulled grain, such as oats or barley is ground and prepasted, for example by extrusion (FI124441, which is herein incorporated by reference) and the product obtained is finely ground, a natural colloidal meal used by the cosmetics industry is obtained, which, when required, fulfills the requirements of the USP monograph for colloidal meal (USP 32-NF27). The properties and allowable claims are described in the Federal Drug Administration (FDA) Federal Register Vol. 69, No. 160, 19th August, 2004. Beta glucan and other soluble substances are easily dissolved from this kind of meal.

Beta glucan -containing prepasted oatmeal does not contain any other ingredients than whole grain oatmeal and water. As a flour it is a natural ingredient in baking.

In the Finnish patent FI124441, the flour containing starch and beta glucan is prepasted by extrusion and finely ground. A flour containing starch and beta glucan can also be prepasted by drying the flour suspension on a roll dryer and grinding it, jet-boiling the flour suspension and grinding it after drying, and by subjecting the flour to heat treatment in the presence of moisture e.g. in a preconditioner or expander and grinding it after drying. The goal of prepasting is to make the starch portion of the flour either partially or fully water-soluble. Grinding is used in order to accelerate the dissolution of beta glucan and starch and to make its processing easier. When a beta glucan -containing prepasted flour is dried and ground, a raw material according to the present invention is obtained. The flour can be produced from oats and barley. In the present invention such flour is termed improver flour.

One of the embodiments of the present invention is a method for the production of a food product comprising ground grain, such as wheat flour, from a dough or a mass. The method is characterized by that the beta glucan -containing dehulled grain is prepasted and ground to improver flour. The improver flour is added into the dough or mass either in dry form, as improver flour - water suspension, mixture of improver flour and oil or emulsion of improver flour, oil and water. The food product to be made may for example be a baking product such as a bread or bum, or a meat product, which comprises ground grain.

According to an embodiment of the invention, the improver flour is produced from oats or barley by extrusion. As raw material for the improver flour it is possible to use whole grain oatmeal, sieved oatmeal, oat bran or some other fraction of oat containing starch and beta glucan, as well as whole grain barley meal or some other fraction of barley containing starch and beta glucan.

According to an embodiment of the invention, as grain raw material for the food product to be produced is used colloidal whole grain oatmeal, sieved oatmeal, sieved and extruded oatmeal, extruded oat bran or flaked oats, preferably colloidal whole grain oatmeal, in addition to other ground grain.

According to another embodiment of the invention, as grain raw material for the food product to be produced is used finely ground whole grain barley meal, sieved barley meal, sieved and extruded barley meal, extruded barley bran or flaked barley, preferably finely ground whole grain barley meal, in addition to other ground grain.

When improver flour is added to baking so that most of its beta glucan is in soluble form, the improver flour is made to function as bread improver. According to the present invention it has been found for the colloidal oatmeal produced by the method described in patent FI 124441 that beta glucan and other ingredients are dissolved well and thus enhance the improver behavior.

A preferred embodiment of the present invention comprises the addition of improver flour to the method in dry form in combination with other dry ingredients.

According to another preferred embodiment of the invention the improver flour is added to the method as water-flour suspension, as mixture of improver flour and oil, or as emulsion of improver flour, oil and water.

Improver flour forms with oil easily and quickly a liquid blend, provided that the amount of oil is appropriate. This blend has low moisture, since no additional water is introduced with water into the blend. Therefore also the activity of water in the blend is low, and the blend is microbiologically preservable. In the present invention the blend of improver flour and oil is termed semifinished margarine product. It functions as a long keeping semifinished margarine product that can be used in baking or meat products, for example. This blend of improver flour and oil functions as bread improver as well.

When water is added to this blend, the starch and beta glucan contained in the improver flour begin to dissolve, and the viscosity of the blend increases. The liquid phases are not separated from each other and from oatmeal, but the improver flour-oil-water instead forms a constant emulsion structure. By correct dosing of water a margarine- and pasta-like structure is easily obtained without homogenization. In the present invention this structure is called margarine substitute, which can be used in baking or meat products, for example. This blend of improver flour, oil and water functions as bread improver as well.

Oils used in the food industry can be used as the oil, for example rapeseed, canola, sunflower, corn, soybean, olive, palm, sesam, camelina, linseed, almond, wheat germ, avocado, peanut, pumpkin seed, hemp, grape ja argano oil. Some oils, e.g. sesam, olive or peanut oils, may introduce new flavors. Some oils, e.g. green pumpkin seed oil may bring about new colors. Some oils introduce functional components, e.g. omega-3 oil, vitamins and/or plant sterols. The oils can also be supplemented with oil-soluble functional components such as vitamins, plant sterols and plant stanols or their derivatives. The blend of improver flour and oil, which is microbiologically preservable, can be supplemented with probiotics allowed to be used in foods suitable for probiotic microorganisms.

The present method is characterized by that the amount of improver flour in the suspension or emulsion is adjusted so that the majority of the beta glucan in the flour is in a dissolved or emulsion-like form at the addition stage.

According to an embodiment of the present invention more than 70%, preferably more than 80% and most preferably more than 90% of the beta glucan in the improver flour is in a dissolved or emulsion-like form at the addition stage.

According to another preferred embodiment the mixture of improver flour and oil forms a natural emulsion-like structure with water also without the usual homogenization and emulsifiers.

The solubility of colloidal oatmeal functioning as improver flour was measured by preparing oatmeal-water suspensions comprising 0.25%, 0.5% and 0.75% beta glucan. The suspensions were put into erlenmeyer flasks and were shaken at 50°C. Viscosity was determined from the flasks every 30 minutes at a shearing rate of 41 l/s.

Viscosity measurement was not possible from the suspension containing 0.25% beta glucan, because the viscosity was similar to that of water. In the suspension containing 0.5% beta glucan, viscosity increased for 90 to 100 minutes, after which the changes in viscosity were very small. In the suspension containing 0.75% beta glucan, viscosity increased for the entire measurement period of 120 minutes. The conclusion from this is that the majority of beta glucan is in dissolved form at a time when the amount of oatmeal in the suspension results in a beta glucan level of approximately 0.5%. Furthermore, the dissolution time is 100 minutes or 120 minutes, depending on the coarseness of the flour.

According to an embodiment of the invention the suspension or emulsion of the colloidal form of the improver flour is soaked for 90 to 120 minutes, preferably about 100 minutes at a temperature of 25 to 40°C or at room temperature to dissolve the beta glucan before adding the other ingredients of the dough or mass.

According to another preferred embodiment, 2 to 10 wt-%, preferably 4 to 8 wt-% of the colloidal form of the improver flour are added to the dough or mass, based on the total weight of the ground grain. Furthermore, the beta glucan content of the flour is between 0.1 and 1 wt-%, preferably 0.25 to 0.75 wt-% and most preferably about 0.50 wt-% based on the total weight of the flour used for the dough or mass.

A farinograph is used to determine the amount of water required for the dough. In this measurement a mixing time to achieve dough viscosity of 500 BU units is also determined, which is thus a preferable embodiment of the present invention, because the gas tightness and elasticity will thus be at the optimum level. By using a farinograph it was observed that it is necessary to increase the water content of the dough when it is being added with colloidal oatmeal functioning as improver flour (table 1). The doughs were also highly stable.

**Table 1. Water binding capacity of doughs comprising colloidal oatmeal. COM = colloidal oatmeal.**

| **Dough** | **Water binding capacity (%) additional water/flour** |
|---|---|
| Control | 64.5 |
| 2% COM | 70.4 |
| 4% COM | 76.0 |
| 6% COM | 79.0 |
| 8% COM | 82.5 |

As noted, the scope of the invention comprises also the use of a blend as a component improving the structure of a food product, which blend is obtained by mixing improver flour with an appropriate amount of oil, whereby a liquid suspension is formed and then with water, whereby the suspension begins to become thicker and an emulsion-like structure is formed. The emulsion-like structure is obtained bay mixing without homogenization and emulsifiers, which are traditionally required for the preparation of emulsions.

According to an embodiment the emulsion structure is preserved before use until a maximum dissolution of beta glucan has taken place, i.e. the viscosity of the emulsion no longer increases. The amount of rapeseed oil is 40% of the emulsion, whereby the fat content becomes 50% of that of baking margarine (table 2).

**Table 2. Blend of colloidal oatmeal, rapeseed oil and water**

| Colloidal oatmeal | Oil | Water | Beta glucan | Structure structural stability | Development of viscosity*) |
|---|---|---|---|---|---|
| 5% | 40% | 55% | 0.3% | liquid, unstable srtucture | |
| 10% | 40% | 50% | 0.5% | viscous liquid, leaking structure | |
| 15% | 40% | 55% | 0.8% | pasta, slightly leaking structure | > 20 min |
| 20% | 40% | 40% | 1% | thick pasta, structure begins to leak within 10 h | approx. 20 min |
| 25% | 40% | 35% | 1.3% | "margarine", stable structure | approx. 15 min |
| 30% | 40% | 30% | 1.5% | "margarine", stable structure | approx. 15 min |

| | | | | | |
|---|---|---|---|---|---|
| *) The higher is the amount of water in the blend, the longer it takes for visible viscosity to develop. | | | | | |

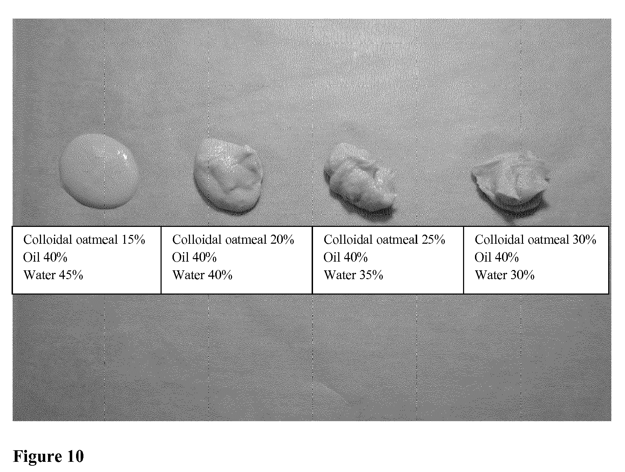

Figure 10 depicts the structure of the emulsions.

According to the invention, the beta glucan -containing flour emulsion is used as bread improver, for example to improve the properties of a baking product in terms of volume, structure or keeping quality or combinations thereof.

According to an embodiment of the present invention the baked product, the dough of which having been added with the oat-oil-water emulsion, comprises less than 70%, preferably less than 60% and most preferably less than 50% less fat in the dough compared with a baked product produced with margarine. The solution according to the invention can thus be used to reduced fat and replace hard fats. In addition, oil is less expensive that margarine.

According to another embodiment the volume of the baked product is at least 10%, preferably > 15% and most preferably approximately 25% greater than that of a corresponding product which contains no beta-glucan -containing improver flour. Furthermore, it is characteristic for the baked product that it keeps softer and longer compared with a baked product baked without beta-glucan -containing improver flour.

According to one embodiment the dough made by the method according to the present invention is frozen before being used for baking. Accordingly, the use of the method and the resulting dough for parbaking is also included within the scope of the invention.

The invention is next described by way of the following non-limiting examples. A skilled person should, however, understand that the embodiments described both in the description and the accompanying examples are only meant to be merely illustrative, and that various changes and modifications are possible within the scope of the invention.

### Examples

### Example 1. Colloidal oatmeal (5,3% beta glucan) acting as improver flour and oat bran (10% beta glucan) as bread improver

The effect of various beta glucan -containing oatmeals on the volume of wheat bread was tested by adding colloidal oatmeal, extruded ground oat bran and oat flakes into the dough. The colloidal oatmeal and flaked oats were added to the dough by preparing a 10% aqueous suspension from them, whereas a 5% aqueous suspension was formed from the extruded and ground oat bran. The aqueous suspensions were allowed to silt up for 100 min. The other ingredients were next added (water, yeast (3.2% of the weight of the flour), salt (1.6%), sugar (1.8%) and oil (1.2%), and a dough was prepared by mixing with a food mixer for 3 minutes. The dough was allowed to rest for 15 minutes, and then a bread was shaped into a casserole and allowed to rise for 60 minutes. The breads were baked in an oven at 210 degrees for 25 minutes.

Shown in Figure 1 is the volume increase of breads compared with control bread as a function of beta glucan content and using different oatmeals. The volume was measured by using a displacement method for small objects (e.g. rapeseeds). It is seen from the figure that by using colloidal oatmeal the volume increased by almost 25% compared with the control bread at a beta glucan content of 0.4%, i.e colloidal oatmeal had been added 8% in terms of the weight of the flour.

Shown in figure 2 are pictures of breads comprising colloidal oatmeal. It is seen from the figure that increasing the amount of beta glucan also increased the pore size of the breads, albeit so that the pore distribution remained fairly constant. This indicates that by using beta glucan the dough is rendered strong and elastic, whereby the gas bubbles formed into the dough grow well and maintain their structure also during baking. The moisture of the bread comprising 8% of colloidal oatmeal was 11.3% higher than that of the control bread.

The moisture was calculated from the weighing results. According to organoleptic assessment the breads comprising colloidal oatmeal also remained soft 2 days longer compared with control breads. This indicates that, owing to the water binding capacity of oatmeal beta glucan, moisture remains better in the breads during baking, and water does not move from the inside to the crust during storage as strongly as in breads to which no oatmeal has been added.

### Example 2. Normal whole grain oatmeal (5.3% beta glucan) acting as improver flour and whole grain barley meal (4.9% beta glucan) as bread improver

The effect of extruded, normally ground and extruded and ground barley meal comprising beta glucan (variety Scarlet) on the volume of wheat bread was tested by adding normally ground oatmeal and ground barley meal into the dough. Both were added to the dough by forming a 10% aqueous suspension from them.

The flour-water blends became coarser than by using extruded finely ground colloidal oatmeal. For this reason the suspensions were allowed to silt up for 120 min. The other ingredients were added next and a dough was prepared by mixing with a food mixer for 3 minutes. The dough was allowed to rest for 15 minutes, and then a bread was shaped into a casserole and allowed to rise for 60 minutes. The breads were baked in an oven at 210 degrees for 25 minutes. Shown in figure 3 is the volume increase of breads compared with control bread as a function of beta glucan content and using extruded normally ground oatmeal. It is seen from the figure that the volume of both breads increased by approximately 18% at a beta glucan content of 0.4% in the flour-water blend, i.e. colloidal oatmeal had been added 8% in terms of the weight of the flour. The volume was measured by using a displacement method for small objects (e.g. rapeseeds).

### Example 3. Functioning of colloidal oatmeal acting as improver flour in automatic bread maker baking

Functionality of oatmeal as bread improver was tested in automatic bread maker baking. Of the wheat flour, 10% was replaced with colloidal oatmeal and the amount of water was increased according to the recipes shown below.

### Control bread (B)

2.5 dl water
400 g wheat flour (Myllyn paras)
2 tsp sugar
1 tsp salt
4 tbs rapeseed oil (approx. 15 g)
25 g yeast

### Bread comprising oatmeal (A)

2.85 dl water
360 g wheat flour (Myllyn paras)
40 g colloidal oatmeal
2 tsp sugar
1 tsp salt
4 tbs rapeseed oil (approx. 15 g)
25 g yeast

Baking was carried out according to the basic instructions of the automatic bread maker (Kenwood). According to the instructions all ingredients are charged at the same time into the machine, which starts to mix then. Both breads comprised approximately 4% of rapeseed oil in terms of the weight of wheat flour. The bread comprising colloidal oatmeal contained 38% of rapeseed oil in terms of the amount of colloidal oatmeal.

As the result, breads shown in figure 4 were obtained. It is seen from the figure that the bread comprising colloidal oatmeal was considerably larger than the control bread. It seems that the tendency of colloidal oatmeal to form emulsions with oil and water explains the larger size of the bread comprising colloidal oatmeal compared with control bread. The increase in volume was not caused by a larger amount of water, since upon separate testing the volume did not increase in a wheat bread having been added with the same amount of water as the bread comprising colloidal oatmeal.

### Example 4. Emulsion of colloidal oatmeal, oil and water as simultaneous margarine substitute and bread improver

Two doughs were made. The control was a normal bun dough (400 g of margarine/liter dough). In another bun dough 400 g of margarine had been replaced with 500 g of oat-oil-water blend. The amount of colloidal oatmeal was 22.7%, oil 45.7% and water 31.6%. There were no differences in dough properties. Processability was also fully identical. In the final product, products made with the oat-oil-water blend were larger and fluffier. The volume of products made with the oat-oil-water blend was 18% larger than that of the control bun dough. The volume was measured by using a displacement method for small objects (e.g. rapeseeds). There was no difference in taste: rapeseed or oats do not taste in the product, because the product contains sugar and cardamom. Keeping quality was measured by leaving products made in both ways in a plastic bag and by daily monitoring of the feel of the product. On the day following baking, the product made with margarine was considerably harder than the one made with the oat-oil-water emulsion. The difference was no longer as large on the second day, but the oat-oil-water still felt markedly better. The difference remained unchanged until the fifth day of measurement, at which time the measurement was stopped. On the fifth day the product made with margarine tasted old, whereas the one made with the oat-oil-water emulsion did not.

### Example 5. Functioning of colloidal meal used as improver in parbaking of bread rolls

The following doughs were made:
1. To the control dough, 0% of colloidal oatmeal acting as improver flour was added.
2. To the dough was added improver flour at 6% of the weight of the flour. A 10% aqueous suspension of the improver flour was formed in advance, and the suspension was allowed to silt up for 100 min. The suspension was added simultaneously with the other ingredients into a Diosna dough mixer. 3 minutes before the end of mixing 1.5% (of the weight of the flour) of improver flour were added dry.
3. To the dough was added improver flour at 6% of the weight of the flour. A 10% aqueous suspension of the improver flour was formed in advance, and the suspension was allowed to silt up for 100 min. The suspension was added simultaneously with the other ingredients into a Diosna dough mixer. 3 minutes before the end of mixing 2.5% (of the weight of the flour) of improver flour were added dry.

The recipes are described in table 3.

**Table 3. Parbaking recipes for bread roll dough.**

| Colloidal in water % | | **0%** | **6%** | **6%** |
|---|---|---|---|---|
| Colloidal dry % | | **0.0%** | **1.5%** | **2.5%** |
| | moisture | | | |
| Wheat flour g | 13% | 1848 | 1630 | 1630 |
| Colloidal g | 10% | 0 | 20 | 50 |
| Additional water g | 100% | 1202 | 325 | 325 |
| Fresh yeast g | 72% | 91 | 80 | 80 |
| Salt g | 0% | 28 | 25 | 25 |
| Sugar g | 0% | 34 | 30 | 30 |
| oil g | 0% | 23 | 20 | 20 |
| colloidal blend 10% | | 0 | 1000 | 1000 |
| of which water g | 100% | 0 | 900 | 900 |
| of which colloidal g | 10% | 0 | 100 | 100 |
| Total g | | 3225 | 3130 | 3160 |

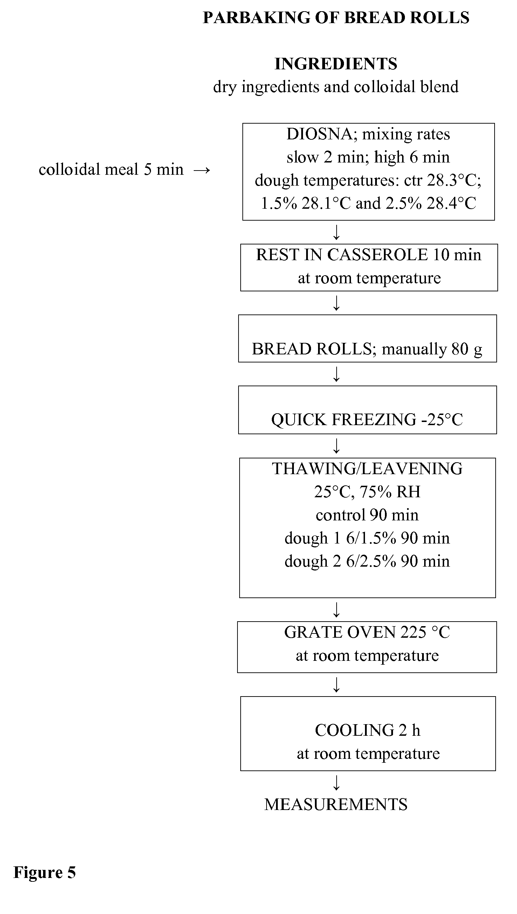

Shown in figure 5 is the parbaking process for bread rolls.

When the dough was added with 6% of improver flour as water blend and 1,5% in dry form, the moisture increased by 6% and volume by 11% compared with the control, and the baking loss was 16% (control, 17%). The results are mean values of six rolls. Moistures were calculated by weighing and volume by the rapeseed displacement method. On palpation the bread roll comprising 6% of improver flour as water blend and 2.5% in dry form was the softest one at start, on the 1st day, 2nd day and 3^{rd} day.

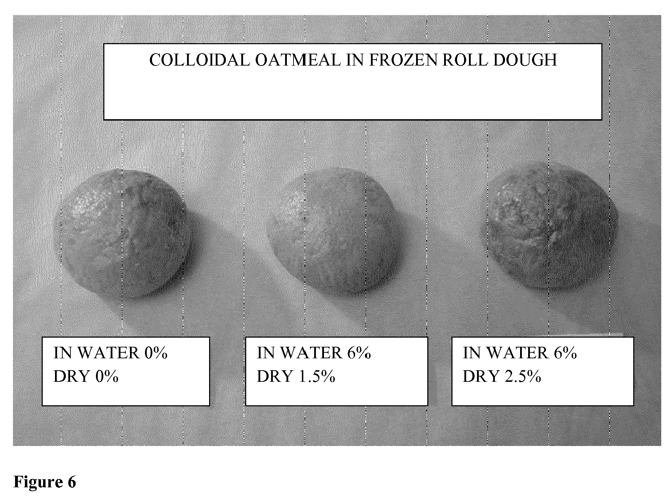

Figure 6 depicts the images of the corresponding bread rolls.

### Example 6. Functioning of colloidal meal used as improver in parbaking of sweet buns

The following doughs were made:
1. Control dough (margarine as fat source).
2. To the dough was added the blend: improver flour 22.9%, oil 45.7% and water 31.4% in place of margarine.
3. To the dough was added the blend: improver flour 22.9%, oil 40.7% and water 36.4% in place of margarine. In addition, colloidal oatmeal was added dry at 1.5% of the weight of the flour.

The recipes are described in table 4.

**Table 4. Parbaking recipes for buns.**

| Colloidal in oil % | | **0%** | **5%** | **5%** |
|---|---|---|---|---|
| Colloidal dry % | | **0.0%** | **0.0%** | **1.5%** |
| | moisture | | | |
| Wheat flour g | 13% | 1628 | 1500 | 1500 |
| Colloidal g | 10% | 0 | 0 | 27 |
| Eggs g | 75% | 89 | 82 | 82 |
| Milk g | 88% | 740 | 682 | 690 |
| Fresh yeast g | 72% | 74 | 68 | 68 |
| Salt g 10 g per liter liquid | 0% | 7.4 | 7.9 | 8.1 |
| Sugar g 225 g per liter liquid | 0% | 189 | 201 | 208 |
| margarine g | 20% | 296 | 0 | 0 |
| colloidal emulsion g | NA | 0 | 341 | 341 |
| of which oil g (45.7%, 40.7%) | 0% | 0 | 156 | 139 |
| of which colloidal g (22.9%) | 10% | 0 | 78 | 78 |
| of which water, remainder g | 100% | 0 | 107 | 124 |
| Total g | | 3023 | 3038 | 3062 |

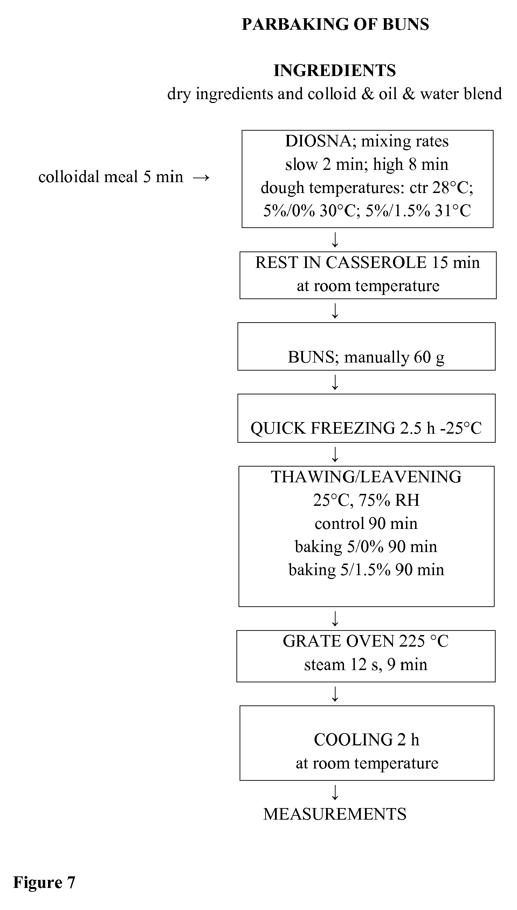

Shown in figure 7 is the parbaking process for buns.

When the dough was added with the emulsion of colloidal meal, oil and water, the volume increased for all buns by more than 20% compared with the margarine buns. When the dough was added with mere emulsion without the dry addition of colloidal meal, the volume of the bun increased by more than 30% compared with the margarine buns. During baking, the moisture of buns remained in proportion with the moisture in the dough. Baking losses for all buns were approximately 5%. The results are mean values of six buns. Moistures were calculated by weighing and volume by the rapeseed displacement method. On palpation the buns having been added with the emulsion were clearly softer immediately, after 1 day, 2 days and 3 days, when the monitoring was stopped. The buns made with the emulsion were better tasting than the control bun.

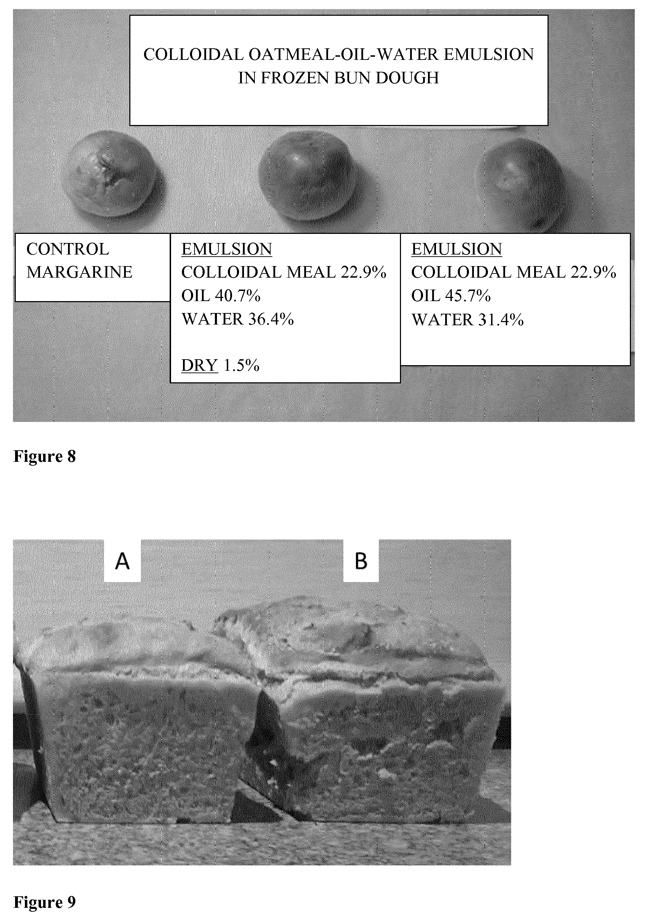

Figure 8 depicts the images of the corresponding buns.

### Example 7. Functioning of colloidal meal used as improver in home parbaking

A dough comprising 6% of improver flour and a control bread dough were prepared as in example 1, but the doughs were allowed to rest for 15 minutes in a refrigerator instead of room temperature, and after setting into casserole they were put into a freezer for 48 hours. After this they were thawed in a refrigerator for 24 hours, leavened at room temperature for one hour and baked as in example 1. This resulted in breads, of which the one comprising 6% of improver flour was 16% larger in volume than the control bread.

The breads are shown in figure 9, where bread A is the control and bread B comprises improver flour.

### References

Patent FI 124441 (incorporated by reference)
Barcenas, M., E.,Benedito., C., Rosell, C., M., Use of hydrocolloids as bread improvers in interrupted baking process with frozen storage, Food Hydrocolloids18 (2004) 769-774.
Huttner, E. K and Arendt, E. K. Recent advances in gluten-free baking and the current status of oats. Trends in Food Science and Technology 21 (2010) 303-312.
Skendi, A., Biliaderis, C. G., Paparegiou, M., Izydorczyk, M. S., Effects of two barley β-glucan isolates on wheat flour dough and bread properties, Food Chemistiy 119 (2010) 1159-1167.
Moriartey, S. E., Barley β-glucan in bread: The journey from production to consumption, Doctoral thesis, University of Alberta, Alberta 2009, 228 p.
United States Pharmacopeial Convention USP 32-NF27, page 2024 describes the raw materials required for oatmeal, packaging and storage, identification, viscosity (including the method of measurement and apparatus), microbial enumeration tests and tests for specified microorganisms, loss on drying, particle size, total ash, fat content, and nitrogen content. The United States Pharmacopeia (USP) is the official pharmacopeia of the United States, published dually with the National Formulary as the USP-NF. The United States Pharmacopeial Convention (usually also called the USP) is the non-profit organization that owns the trademark and copyright to the USP-NF and publishes it every year. Prescription and over-the-counter medicines and other health care products sold in the United States are required to follow the standards in the USP-NF. USP also sets standards for food ingredients and dietary supplements.
Food and Drug Administration (FDA) Monograph Vol. 69, No. 160, 2004.

## Claims

1. A method for the production of a food product comprising ground grain from a dough or a mass, **characterized in that** beta glucan -containing dehulled grain is prepasted and ground to improver flour, which is added into the dough or mass in an amount of 2 to 10 wt-% of the total weight of the ground grain as a suspension of improver flour and water, as a mixture of improver flour and oil or as an emulsion of improver flour, oil and water.

2. The method according to claim 1, **characterized in that** > 50%, preferably > 70% and most preferably > 90% of the beta glucan in the improver flour is in a dissolved or emulsion-like form at the addition stage.

3. The method according to claim 1 or 2, **characterized in that** the mixture of the improver flour and oil forms a natural emulsion-like structure with water without homogenization and emulsifiers.

4. The method according to any of the preceding claims, **characterized in that** the beta glucan content of the flour is 0.1 to 1 wt-%, preferably 0.25 to 0.75 wt-% and most preferably about 0.50 wt-% in terms of the total weight of grain ground into the dough or mass.

5. The method according to any of the preceding claims, **characterized in that** the suspension of the improver flour is soaked for 90 to 120 minutes, preferably about 100 minutes at a temperature of 25 to 40°C or before adding the other ingredients of the dough or mass.

6. The method according to any of the preceding claims, **characterized in that** the amount of water in the dough or mass suspension or emulsion containing improver flour is adjusted through viscosity so that the viscosity is maintained at 500 BU-units.

7. The method according to any of the preceding claims, **characterized in that** the improver flour is produced by extrusion from oat or barley.

8. The method according to any of the preceding claims, **characterized in that** as grain raw material for the food product to be produced is used colloidal whole grain oatmeal, sieved oatmeal, sieved and extruded oatmeal, extruded oat bran or flaked oats, preferably colloidal oatmeal, in addition to other ground grain.

9. The method according to any of the preceding claims, **characterized in that** as grain raw material for the food product to be produced is used finely ground whole grain barley meal, sieved barley meal, sieved and extruded barley meal, extruded barley bran or flaked barley, preferably finely ground whole grain barley meal, in addition to other ground grain.

10. The method according to any of the preceding claims, **characterized in that** the food product is produced from dough, to which colloidal whole grain oatmeal, oil and water have been added as a margarine substitute.

11. The method according to any of the preceding claims, **characterized in that** the food product is produced from dough, to which colloidal whole grain oatmeal and oil as a semifinished margarine product, and water have been added.

12. The method according to any of the preceding claims, **characterized in that** the dough is frozen before being used for baking.

13. A dough produced by the method according to any of claims 1 to 12.

14. A baked product produced from the dough according to claim 13, **characterized in that** its volume is at least 10%, preferably > 15% and most preferably approximately 25% greater than that of a corresponding product which contains no beta-glucan -containing improver flour, and wherein an oat-oil-water emulsion has been added to the dough resulting in a baking product comprising at least 50% less fat compared with a baked product produced with margarine.

15. The baked product according to claim 14, **characterized in that** it keeps softer compared with a baked product baked without improver flour containing beta glucan.

16. Use of colloidal, beta glucan -containing flour as a component improving the properties of a baking product in terms of volume, structure or keeping quality, or combinations thereof, which flour has been obtained by mixing colloidal, beta glucan - containing meal with water or with an emulsion of oil and water so that part of the beta glucan is dissolved in water.

17. The use according to claim 16, **characterized in that** the beta glucan -containing flour is used as bread improver.

18. The use according to claim 16 or 17 for parbaking.
